# EUROPEAN PATENT SPECIFICATION

(11) **EP 3 795 049 B1**
(45) Date of publication and mention of the grant of the patent: **03.08.2022**
(21) Application number: 18928340.1
(22) Date of filing: 22.12.2018
(51) Int. Cl.: A47L 9/20

(54) **VACUUM CLEANER**
STAUBSAUGER
ASPIRATEUR

(30) Priority: 30.07.2018 CN 201810853256
(43) Date of publication of application: 24.03.2021
(73) Proprietor: Gree Electric Appliances, Inc. of Zhuhai, Zhuhai, Guangdong 519070 (CN)
(72) Inventor: WANG, Dexu, Zhuhai, Guangdong 519070 (CN); LIAO, Hongbin, Zhuhai, Guangdong 519070 (CN); CHEN, Yong, Zhuhai, Guangdong 519070 (CN); HUANG, Yuelin, Zhuhai, Guangdong 519070 (CN); REN, Min, Zhuhai, Guangdong 519070 (CN); CHEN, Shanyi, Zhuhai, Guangdong 519070 (CN)
(74) Representative: Berggren Oy
(86) International application number: PCT/CN2018/122929
(87) International publication number: WO 2020/024536

(56) References cited:
- CN-A- 101 091 633
- CN-A- 106 377 204
- CN-U- 206 183 189
- CN-U- 206 183 189
- CN-U- 206 390 854
- CN-U- 206 934 031
- GB-A- 2 440 107
- JP-A- 2017 131 442
- US-A1- 2017 196 421

## Description

### Technical Field

The disclosure relates to the technical field of vacuum cleaners, and in particular to a vacuum cleaner.

### Background

Vacuum cleaners become more and more popular as a deep cleaning device. But cleaning thereof is mainly that dust is absorbed by a suction force formed by a negative pressure generated through a motor, for some dirt in small gaps, it is often not sucked by the suction force, so a user needs to clean in other methods, and it is very inconvenient.

The Chinese patent literature CN106073629A discloses a vacuum cleaner, including: a housing, an air inlet and an air blowing port are formed on the housing, and the air blowing port is configured close to the air inlet; a dust cup, the dust cup is provided on the housing, and the dust cup is connected with the air inlet; and a motor, the motor is provided with a motor cavity, the motor cavity is communicated with the dust cup, an air flow entering from the air inlet is flowed through the dust cup and the motor, and flowed out from the air blowing port; and the above vacuum cleaner has functions of dust suction and air blowing, the dust on a cleaning surface is effectively blown away through the air blowing, and at the same time, the blown dust is sucked into the dust cup by using a dust suction port with a larger size, the vacuum cleaner has the better cleaning effect, and is higher in cleaning efficiency.

However, in the above scheme, when the dust cup in the vacuum cleaner is cleaned, the dust cup needs to be detached to clean alone, and operations such as blowing and washing are also required to be performed after the dust is poured out, the interior of an air inlet pipeline and the dust cup is cleaned up, therefore cleaning work to the dust cup is more troublesome.

US 2017/196421 A1 discloses a vacuum cleaner according to the preamble of independent claim 1.

### Summary

Therefore, a technical problem to be solved by some embodiments of the disclosure is to overcome a defect in an existing technology that an operation is more troublesome when a dust cup in a vacuum cleaner is cleaned, thereby a vacuum cleaner capable of performing internal cleaning of a dust cup more effortlessly is provided.
a vacuum cleaner body provided with a first air inlet and a first air outlet respectively communicated with a motor; and
a dustiness cup internally provided with a cyclone separator, the dustiness cup is provided with a second air inlet and a second air outlet respectively communicated with the cyclone separator.

The dustiness cup has a dust suction position for communicating the second air inlet with the first air outlet, in the dust suction position, the dustiness cup is capable of, through performing dustiness separation on air entering from the first air outlet, enabling clean air to be discharged to an outside from the second air outlet; and
the dustiness cup also has a purge position for communicating the second air inlet with the first air inlet, in the purge position, the dustiness cup is capable of, through enabling clean air to enter an interior of the dustiness cup from the second air outlet, and enter the vacuum cleaner body from the second air inlet, finally discharging to an outside from the first air outlet.

In some embodiments, the dustiness cup is internally provided with an air inlet channel, an air inlet end of the air inlet channel is suitably communicated with an air inlet pipeline, an air outlet end of the air inlet channel is suitably communicated with the first air inlet.

In some embodiments, when the dustiness cup is in the purge position, the air outlet end of the air inlet channel is communicated with the first air outlet.

In some embodiments, the second air outlet is provided with a filter.

In some embodiments, a top of the dustiness cup is provided with an opening for detaching and assembling the cyclone separator, and the opening is sealed through a cup cover.

In some embodiments, further including:
an air inlet pipeline, connected to an air inlet end of the air inlet channel, the air inlet pipeline is a straight pipe used to be stretched to an area to be cleaned.

In some embodiments, an orientation of the second air outlet is the same as a stretching direction of the air inlet pipeline.

In some embodiments, the second air outlet is configured close to a root of the air inlet pipeline.

In some embodiments, further including a positioning connection structure provided on the vacuum cleaner body and the dustiness cup, when the dustiness cup is positioned in the dust suction position and the purge position, the dustiness cup is installed on the vacuum cleaner body through the positioning connection structure.

In some embodiments, the positioning connection structure includes:
an inserting body, which is a columnar structure provided on the dustiness cup, a center line thereof is positioned at a midpoint of the second air inlet and the second air outlet; and
a connecting body, which is a cylindrical structure provided on the vacuum cleaner body, a center line thereof is positioned at a midpoint of the first air inlet and the first air outlet.

After the inserting body is inserted into the connecting body, the dustiness cup and the vacuum cleaner body are formed rotating shaft connection.

The technical scheme of the disclosure has the following advantages:
1. The vacuum cleaner provided by the disclosure, when the dustiness cup internally provided with the cyclone separator is connected to the vacuum cleaner body, has switchable the dust suction position and the purge position, in the dust suction position, the air enters the dustiness cup from the first air outlet and is discharged from the second air outlet, and the sequence is reversed in the purge position, so the air enters the dustiness cup from the second air outlet and is discharged from the first air outlet, in this way, when the internal cleaning of the dustiness cup is performed, the operation is more convenient, and the internal cleaning of the dustiness cup is performed more effortlessly.
2. The vacuum cleaner provided by the disclosure, provided with the air inlet channel in the dustiness cup, the air inlet pipeline is communicated with the vacuum cleaner body through the air inlet channel, therefore, the structure of the vacuum cleaner is more compact, the air inlet pipeline is avoided from bending, and a wind pressure is guaranteed.
3. The vacuum cleaner provided by the disclosure, when the dustiness cup is in the purge position, the air inlet channel is communicated with the first air outlet of the vacuum cleaner body, in this way, when the internal cleaning is performed, the air may pass through the air inlet channel while discharged to the outside, thereby purge cleaning is performed on the air inlet channel.
4. The vacuum cleaner provided by the disclosure, provided with the filter in the second air outlet, on the one hand, impurities is effectively prevented from entering the interior of the vacuum cleaner while the dust suction is performed, on the other hand, a purge gas entering the vacuum cleaner body is purified when purge is performed, a purge effect is further achieved.
5. The vacuum cleaner provided by the disclosure, on a top of the dustiness cup, is provided with the opening for detaching and assembling the cyclone separator, the cyclone separator is conveniently detached and assembled from the top, so operation convenience of the internal cleaning of the vacuum cleaner is improved.
6. The vacuum cleaner provided by the disclosure, provided with the air inlet pipeline, the air inlet pipeline is stretched to the area to be cleaned after being connected to the air inlet channel, thereby the effective dust suction for the area to be cleaned is achieved, in addition, when the internal cleaning is performed, the internal dirt of the vacuum cleaner is discharged to an appointed further position.
7. The vacuum cleaner provided by the disclosure, the orientation of the second air outlet is the same as the stretching direction of the air inlet pipeline, when the internal purge-type cleaning of the vacuum cleaner is performed, flying dust which does not fall to the ground is sucked into the vacuum cleaner again in time, so the outside environment is effectively improved.
8. The vacuum cleaner provided by the disclosure, the second air outlet is configured close to the root of the air inlet pipeline, in this way, when a dust suction operation is performed, a pressure of the air discharged from the second air outlet may not affect the dust suction operation of the vacuum cleaner.
9. The vacuum cleaner provided by the disclosure, detaching and combining of the vacuum cleaner body and the dustiness cup are achieved by the positioning connection structure, the positioning connection structure adopts a sheathed combination of the inserting body and the connecting body, thereby the simple and convenient switching of the dust suction position and the purge position is achieved.

### Brief Description of the Drawings

In order to more clearly describe specific implementation modes of the disclosure or technical schemes in an existing technology, drawings that need to be used in description of the specific implementation modes or the existing technology are briefly introduced below, apparently, the drawings described below are some implementation modes of the disclosure, under a precondition without creative work, those of ordinary skill in the art may also acquire other drawings according to these drawings.
Fig. 1 is a front view of a dustiness cup of the disclosure positioned in a dust suction position.
Fig. 2 is a front view after section view is performed on an air inlet pipeline in Fig. 1.
Fig. 3 is an exploded diagram of Fig. 1.
Fig. 4 is a front view of the dustiness cup of the disclosure positioned in a purge position.

Description of drawing reference signs:
1. Vacuum cleaner body; 11. First air inlet; 12. First air outlet; 2. Dustiness cup; 21. Second air inlet; 22. Second air outlet; 23. Air inlet channel; 231. Air inlet end; 232. Air outlet end; 24. Cup cover; 3. Cyclone separator; 4. Filter; 5. Air inlet pipeline; 6. Positioning connection structure; 61. Inserting body; and 62. Connecting body.

### Detailed Description of the Embodiments

Technical schemes of the disclosure is clearly and completely described below in combination with drawings, it is apparently that the embodiments described are only a part of the embodiments of the disclosure, rather than all of the embodiments. Based on the embodiments of the disclosure, all other embodiments acquired by those of ordinary skill in the art without creative work shall fall within a scope of protection of the disclosure.

In the description of the disclosure, it should be noted that orientation or position relationships indicated by terms "center", "upper", "lower", "left", "right", "vertical", "horizontal", "inner", "outer" and the like are based on the orientation or position relationships shown in the drawings, it is only used for conveniently describing the disclosure and simplifying the description, rather than indicating or implying that indicated device or element must have a specific orientation, and be constructed and operated in the specific orientation, therefore it may not be understood as limitation to the disclosure. In addition, terms "first", "second", and "third" are only used for descriptive purposes, and may not be understood as indicating or implying relative importance.

In the description of the disclosure, it should be noted that unless otherwise clearly specified and limited, terms "install", "link" and "connect" should be understood in broad sense, for example, is fixed connection, or is detachable connection, or integrated connection; is mechanical connection, or is electrical connection; is direct connection, or is indirect connection through an intermediate medium, and is internal communication between two elements. Those of ordinary skill in the art may understand the specific meaning of the above terms in the disclosure according to specific situations.

In addition, technical features related in the different implementation modes of the disclosure described below is combined with each other as long as they do not conflict with each other.

### Embodiment 1

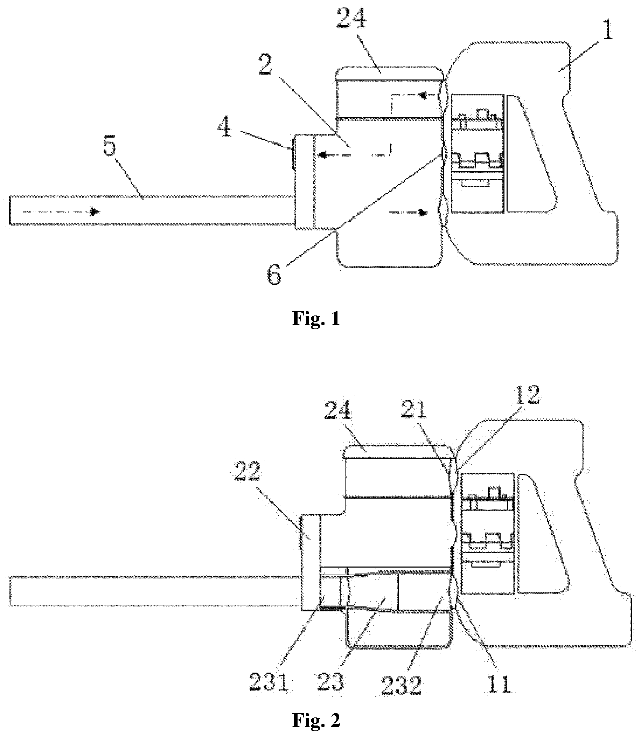

The present embodiment provides a vacuum cleaner, as shown in Fig. 1-4, including: a vacuum cleaner body 1 and a dustiness cup 2; the vacuum cleaner body 1 is provided with a first air inlet 11 and a first air outlet 12 respectively communicated with a motor; and the dustiness cup 2 is internally provided with a cyclone separator 3, the dustiness cup 2 is provided with a second air inlet 21 and a second air outlet 22 respectively communicated with the cyclone separator 3.

The dustiness cup 2 has a dust suction position, as shown in Fig. 1 and Fig. 2, for communicating the second air inlet 21 with the first air outlet 12, in the dust suction position, the dustiness cup 2 is capable of, through performing dustiness separation on air entering from the first air outlet 12, enabling clean air to be discharged to an outside from the second air outlet 22.

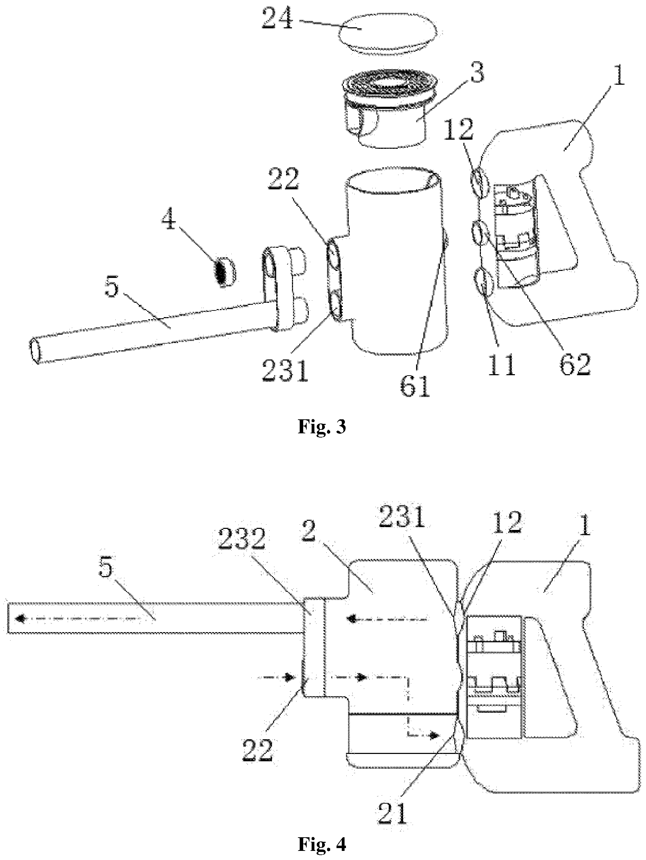

The dustiness cup 2 also has a purge position, as shown in Fig. 4, for communicating the second air inlet 21 with the first air inlet 11, in the purge position, the dustiness cup 2 is capable of, through enabling clean air to enter an interior of the dustiness cup 2 from the second air outlet 22, and enter the vacuum cleaner body 1 from the second air inlet 21, finally discharging to an outside from the first air outlet 12.

In the above scheme, when the dustiness cup internally provided with the cyclone separator is connected to the vacuum cleaner body, the vacuum cleaner has switchable dust suction position and purge position, in the dust suction position, the air enters the dustiness cup from the first air outlet and is discharged from the second air outlet, and the sequence is reversed in the purge position, so the air enters the dustiness cup from the second air outlet and is discharged from the first air outlet, in this way, when the internal cleaning of the dustiness cup is performed, the operation is more convenient, and the internal cleaning of the dustiness cup is performed more effortlessly.

Specifically, the dustiness cup 2 is internally provided with an air inlet channel 23, an air inlet end 231 of the air inlet channel 23 is suitably communicated with an air inlet pipeline 5, an air outlet end 232 of the air inlet channel 23 is suitably communicated with the first air inlet 11.

As shown in Fig. 2, when the dustiness cup 2 is in the purge position, the air outlet end 232 of the air inlet channel 23 is communicated with the first air outlet 12.

In addition, the air inlet channel 23 in the dustiness cup 2 is able to be omitted, an air inlet pipeline 5 is directly connected with the vacuum cleaner body 1.

As another implementation mode, the second air outlet 22 is provided with a filter 4.

As another implementation mode, a top of the dustiness cup 2 is provided with an opening for detaching and assembling the cyclone separator 3, and the opening is sealed through a cup cover 24.

As another implementation mode, further including the air inlet pipeline 5, used for stretching to an area to be cleaned, or discharging dirt to an appointed position when internal self-cleaning of the vacuum cleaner is performed.

Specifically, the air inlet pipeline 5 is a straight pipe, connected to an air inlet end 231 of the air inlet channel 23, the second air outlet 22 is configured in the root close to the air inlet pipeline 5, and an orientation of the second air outlet 22 is the same as a stretching direction of the air inlet pipeline 5.

In addition, a configuring position of the second air outlet 22 is independent of the air inlet pipeline 5.

As another implementation mode, further including a positioning connection structure 6 provided on the vacuum cleaner body 1 and the dustiness cup 2, when the dustiness cup 2 is positioned in the dust suction position and the purge position, the dustiness cup 2 is installed on the vacuum cleaner body 1 through the positioning connection structure 6.

Specifically, the positioning connection structure 6 includes an inserting body 61 and a connecting body 62; the inserting body 61 is a columnar structure provided on the dustiness cup 2, a center line thereof is positioned at a midpoint of the second air inlet 21 and the second air outlet 22; the connecting body 62 is a cylindrical structure provided on the vacuum cleaner body 1, a center line thereof is positioned at a midpoint of the first air inlet 11 and the first air outlet 12; and after the inserting body 61 is inserted into the connecting body 62, the dustiness cup 2 and the vacuum cleaner body 1 are formed rotating shaft connection.

In addition, the positioning connection structure 6 is also adopt other conventional structures besides the structure including the inserting body 61 and the connecting body 62.

### Operation method

When a dust suction operation is performed, the dustiness cup 2 is configured in the dust suction position as shown in Fig. 1 and Fig. 2, dirt enters from the air inlet pipeline 5, enters the interior of the vacuum cleaner body 1 along the air inlet channel 23, and then is upwards flowed, and enters the dustiness cup 2 from the first air outlet 12, dustiness separation is performed in the dustiness cup 2 through the cyclone separator 3, finally clean air is discharged to the outside from the second air outlet 22.

When purge or internal cleaning operation is performed, the dustiness cup 2 is configured in the purge position as shown in Fig. 4, air passes through the filter 4 from the second air outlet 22 and enters the interior of the dustiness cup 2, and is flowed in the cyclone separator 3 in an air flow opposite to a dust suction direction, and then the air containing the dirt enters the vacuum cleaner body 1, the air flow in the vacuum cleaner body 1 is upwards flowed, enters the air inlet channel 23 from the first air outlet 12, and finally discharged to the outside along the air inlet pipeline

## Claims

1. A vacuum cleaner, comprising:
a vacuum cleaner body (1) provided with a first air inlet (11) and a first air outlet (12) respectively communicated with a motor;
a dustiness cup (2) internally provided with a cyclone separator (3), the dustiness cup (2) is provided with a second air inlet (21) and a second air outlet (22) respectively communicated with the cyclone separator (3);
the dustiness cup (2) has a dust suction position for communicating the second air inlet (21) with the first air outlet (12), in the dust suction position, the dustiness cup (2) is capable of, through performing dustiness separation on air entering from the first air outlet (12), enabling clean air to be discharged to an outside from the second air outlet (22); **characterised in that**
the dustiness cup (2) also has a purge position for communicating the second air inlet (21) with the first air inlet (11), in the purge position, the dustiness cup (2) is capable of, through enabling clean air to enter an interior of the dustiness cup (2) from the second air outlet (22), and enter the vacuum cleaner body (1) from the second air inlet (21), finally discharging to an outside from the first air outlet (12).

2. The vacuum cleaner as claimed in claim 1, wherein the dustiness cup (2) is internally provided with an air inlet channel (23), an air inlet end (231) of the air inlet channel (23) is suitably communicated with an air inlet pipeline (5), an air outlet end (232) of the air inlet channel (23) is suitably communicated with the first air inlet (11).

3. The vacuum cleaner as claimed in claim 2, wherein when the dustiness cup (2) is in the purge position, the air outlet end (232) of the air inlet channel (23) is communicated with the first air outlet (12).

4. The vacuum cleaner as claimed in claim 3, wherein the second air outlet (22) is provided with a filter (4).

5. The vacuum cleaner as claimed in claim 4, wherein a top of the dustiness cup (2) is provided with an opening for detaching and assembling the cyclone separator (3), and the opening is sealed through a cup cover (24).

6. The vacuum cleaner as claimed in claim 2, further comprising:
an air inlet pipeline (5), connected to an air inlet end (231) of the air inlet channel (23), the air inlet pipeline (5) is a straight pipe used to be stretched to an area to be cleaned.

7. The vacuum cleaner as claimed in claim 6, wherein an orientation of the second air outlet (22) is the same as a stretching direction of the air inlet pipeline (5).

8. The vacuum cleaner as claimed in claim 7, wherein the second air outlet (22) is configured close to a root of the air inlet pipeline (5).

9. The vacuum cleaner as claimed in claim 2, further comprising a positioning connection structure (6) provided on the vacuum cleaner body (1) and the dustiness cup (2), when the dustiness cup (2) is positioned in the dust suction position and the purge position, the dustiness cup (2) is installed on the vacuum cleaner body (1) through the positioning connection structure (6).

10. The vacuum cleaner as claimed in claim 9, wherein the positioning connection structure (6) comprises:
an inserting body (61), which is a columnar structure provided on the dustiness cup (2), a center line thereof is positioned at a midpoint of the second air inlet (21) and the second air outlet (22);
a connecting body (62), which is a cylindrical structure provided on the vacuum cleaner body (1), a center line thereof is positioned at a midpoint of the first air inlet (11) and the first air outlet (12); and
after the inserting body (61) is inserted into the connecting body (62), the dustiness cup (2) and the vacuum cleaner body (1) are formed rotating shaft connection.

## Patentansprüche

1. Staubsauger, umfassend:
einen Staubsaugerkörper (1), der mit einem ersten Lufteinlass (11) und einem ersten Luftauslass (12) versehen ist, die jeweils mit einem Motor in Verbindung stehen;
einen Staubbecher (2), der innen mit einem Zyklonabscheider (3) versehen ist, wobei der Staubbecher (2) mit einem zweiten Lufteinlass (21) und
einem zweiten Luftauslass (22) versehen ist, die jeweils mit dem Zyklonabscheider (3) in Verbindung stehen;
der Staubbecher (2) eine Staubansaugposition zum Verbinden des zweiten Lufteinlasses (21) mit dem ersten Luftauslass (12) in der Staubansaugposition aufweist,
wobei der Staubbecher (2) in der Lage ist, durch Durchführen einer Staubabscheidung an Luft, die von dem ersten Luftauslass (12) eintritt, zu ermöglichen, dass saubere Luft von dem zweiten Luftauslass (22) nach außen abgegeben wird; **dadurch gekennzeichnet, dass** der Staubbecher (2) auch eine Spülposition zum Verbinden des zweiten Lufteinlasses (21) mit dem ersten Lufteinlass (11) in der Spülposition hat, der Staubbecher (2) in der Lage ist, indem er ermöglicht,
dass saubere Luft von dem zweiten Luftauslass (22) in ein Inneres des Staubbechers (2) eintritt, und vom zweiten Lufteinlass (21) in den Staubsaugerkörper (1) eintritt und schließlich vom ersten Luftauslass (12) nach außen austritt.

2. Staubsauger nach Anspruch 1, **dadurch gekennzeichnet, dass** der Staubbecher (2) innen mit einem Lufteinlasskanal (23) versehen ist, ein Lufteinlassende (231) des Lufteinlasskanals (23) in geeigneter Weise mit einer Lufteinlassrohrleitung (5) verbunden ist, ein Luftauslassende (232) des Lufteinlasskanals (23) in geeigneter Weise mit dem ersten Lufteinlass (11) verbunden ist.

3. Staubsauger nach Anspruch 2, wobei, wenn sich der Staubbecher (2) in der Spülposition befindet, das Luftauslassende (232) des Lufteinlasskanals (23) mit dem ersten Luftauslass (12) in Verbindung steht.

4. Staubsauger nach Anspruch 3, **dadurch gekennzeichnet, dass** der zweite Luftauslass (22) mit einem Filter (4) versehen ist.

5. Staubsauger nach Anspruch 4, wobei eine Oberseite des Staubbechers (2) mit einer Öffnung zum Abnehmen und Zusammenbauen des Zyklonabscheiders (3) versehen ist und die Öffnung durch einen Behälterdeckel (24) abgedichtet ist.

6. Staubsauger nach Anspruch 2, ferner umfassend:
eine Lufteinlassleitung (5), die mit einem Lufteinlassende (231) des Lufteinlasskanals (23) verbunden ist, wobei die Lufteinlassleitung (5) ein gerades Rohr ist, das verwendet wird, um zu einem zu reinigenden Bereich gestreckt zu werden.

7. Staubsauger nach Anspruch 6, wobei eine Ausrichtung des zweiten Luftauslasses (22) die gleiche wie eine Streckrichtung der Lufteinlassleitung (5) ist.

8. Staubsauger nach Anspruch 7, wobei der zweite Luftauslass (22) nahe einer Wurzel der Lufteinlassleitung (5) konfiguriert ist.

9. Staubsauger nach Anspruch 2, ferner umfassend eine Positionierungsverbindungsstruktur (6), die an dem Staubsaugerkörper (1) und dem Staubbecher (2) vorgesehen ist, wenn der Staubbecher (2) in der Staubabsaugposition und der Spülposition positioniert ist, wobei der Staubbecher (2) an dem Staubsaugerkörper (1) durch die Positionierungsverbindungsstruktur (6) installiert ist.

10. Staubsauger nach Anspruch 9, wobei die Positionierverbindungsstruktur (6) Folgendes umfasst:
einen Einsetzkörper (61), der eine säulenartige Struktur ist, die auf dem Staubbecher (2) vorgesehen ist, wobei eine Mittellinie davon an einem Mittelpunkt des zweiten Lufteinlasses (21) und des zweiten Luftauslasses (22) positioniert ist;
einen Verbindungskörper (62), der eine zylindrische Struktur ist, die an dem Staubsaugerkörper (1) vorgesehen ist, wobei eine Mittellinie davon an einem Mittelpunkt des ersten Lufteinlasses (11) und des ersten Luftauslasses (12) positioniert ist; und
wobei nachdem der Einsetzkörper (61) in den Verbindungskörper (62) eingesetzt ist, der Staubbecher (2) und der Staubsaugerkörper (1) eine Drehwellenverbindung bilden.

## Revendications

1. Aspirateur, comprenant :
un corps d'aspirateur (1) pourvu d'une première entrée d'air (11) et d'une première sortie d'air (12) communiquant respectivement avec un moteur ;
une coupelle de poussière (2) pourvue intérieurement d'un séparateur à cyclone (3), la coupelle de poussière (2) est pourvue d'une seconde entrée d'air (21) et d'une seconde sortie d'air (22) communiquant respectivement avec le séparateur à cyclone (3) ;
la coupelle de poussière (2) présente une position d'aspiration de poussière pour faire communiquer la seconde entrée d'air (21) avec la première sortie d'air (12), dans la position d'aspiration de poussière, la coupelle de poussière (2) est capable, en réalisant une séparation de poussière sur de l'air entrant depuis la première sortie d'air (12), de permettre à de l'air propre d'être évacué vers l'extérieur depuis la seconde sortie d'air (22) ; **caractérisé en ce que**
la coupelle de poussière (2) présente également une position de purge pour faire communiquer la seconde entrée d'air (21) avec la première entrée d'air (11), dans la position de purge, la coupelle de poussière (2) est capable, en permettant à de l'air propre d'entrer à l'intérieur de la coupelle de poussière (2) depuis la seconde sortie d'air (22), et d'entrer dans le corps d'aspirateur (1) depuis la seconde entrée d'air (21), de l'évacuer finalement vers l'extérieur depuis la première sortie d'air (12).

2. Aspirateur selon la revendication 1, dans lequel la coupelle de poussière (2) est pourvue à l'intérieur d'un canal d'entrée d'air (23), une extrémité d'entrée d'air (231) du canal d'entrée d'air (23) est convenablement mise en communication avec une conduite d'entrée d'air (5), une extrémité de sortie d'air (232) du canal d'entrée d'air (23) est convenablement mise en communication avec la première entrée d'air (11).

3. Aspirateur selon la revendication 2, dans lequel lorsque la coupelle de poussière (2) est dans la position de purge, l'extrémité de sortie d'air (232) du canal d'entrée d'air (23) est mise en communication avec la première sortie d'air (12).

4. Aspirateur selon la revendication 3, dans lequel la seconde sortie d'air (22) est pourvue d'un filtre (4).

5. Aspirateur selon la revendication 4, dans lequel une partie supérieure de la coupelle de poussière (2) est pourvue d'une ouverture pour détacher et assembler le séparateur à cyclone (3), et l'ouverture est scellée par l'intermédiaire d'un couvercle de coupelle (24) .

6. Aspirateur selon la revendication 2, comprenant en outre :
une conduite d'entrée d'air (5), reliée à une extrémité d'entrée d'air (231) du canal d'entrée d'air (23), la conduite d'entrée d'air (5) est un tube droit utilisé pour être étiré jusqu'à une zone à nettoyer.

7. Aspirateur selon la revendication 6, dans lequel une orientation de la seconde sortie d'air (22) est la même qu'une direction d'étirement de la conduite d'entrée d'air (5).

8. Aspirateur selon la revendication 7, dans lequel la seconde sortie d'air (22) est conçue à proximité d'une emplanture de la conduite d'entrée d'air (5) .

9. Aspirateur selon la revendication 2, comprenant en outre une structure de raccordement de positionnement (6) prévue sur le corps d'aspirateur (1) et la coupelle de poussière (2), lorsque la coupelle de poussière (2) est positionnée dans la position d'aspiration de poussière et la position de purge, la coupelle de poussière (2) est installée sur le corps d'aspirateur (1) par l'intermédiaire de la structure de raccordement de positionnement (6).

10. Aspirateur selon la revendication 9, dans lequel la structure de raccordement de positionnement (6) comprend :
un corps d'insertion (61), qui est une structure colonnaire prévue sur la coupelle de poussière (2), dont une ligne médiane est positionnée au niveau d'un point médian de la seconde entrée d'air (21) et de la seconde sortie d'air (22) ;
un corps de raccordement (62), qui est une structure cylindrique prévue sur le corps d'aspirateur (1), dont une ligne médiane est positionnée au niveau d'un point médian de la première entrée d'air (11) et de la première sortie d'air (12) ; et
après que le corps d'insertion (61) a été inséré dans le corps de raccordement (62), la coupelle de poussière (2) et le corps d'aspirateur (1) sont formés par raccordement d'arbre rotatif.
